# EUROPÄISCHE PATENTSCHRIFT

(11) **EP 2 507 492 B1**
(45) Veröffentlichungstag und Bekanntmachung des Hinweises auf die Patenterteilung: **01.06.2016**
(21) Anmeldenummer: 10784780.8
(22) Anmeldetag: 25.11.2010
(51) Int. Cl.: F02B 75/06

(54) **BRENNKRAFTMASCHINE MIT EINEM ZYLINDERKOPF UND EINEM ZYLINDERBLOCK**
INTERNAL COMBUSTION ENGINE HAVING A CYLINDER HEAD AND A CYLINDER BLOCK
MOTEUR À COMBUSTION INTERNE POURVU D'UNE CULASSE ET D'UN BLOC-CYLINDRES

(30) Priorität: 03.12.2009 AT 19212009
(43) Veröffentlichungstag der Anmeldung: 10.10.2012
(73) Patentinhaber: AVL List GmbH, 8020 Graz (AT)
(72) Erfinder: MELDE-TUCZAI, Helmut, A-8042 Graz (AT); KNOLLMAYR, Christof, A-8042 Graz (AT); ZURK, Andreas, A-8481 Weinburg (AT)
(74) Vertreter: Babeluk, Michael
(86) Internationale Anmeldenummer: PCT/EP2010/068200
(87) Internationale Veröffentlichungsnummer: WO 2011/067159

(56) Entgegenhaltungen:
- DE-A1- 2 444 659
- DE-A1- 2 501 605
- DE-B3-102004 027 588
- US-A- 4 177 773

## Beschreibung

Die Erfindung betrifft eine Brennkraftmaschine mit einem Zylinderkopf und einem Zylinderblock, wobei am Zylinderblock ein Kurbelgehäuse befestigt ist, und wobei im Kurbelgehäuse zumindest eine Massenausgleichswelle gelagert ist, wobei zumindest eine Lagerbohrung für die Massenausgleichswelle durch eine Flanschbuchse gebildet ist, welche im Bereich einer Stirnseite des Kurbelgehäuses befestigt, insbesondere angeschraubt ist.

Es ist bekannt, Zylinderkopf und Zylinderblock als Einheit auszuführen. Derartige Kopf-Zylinder-Block-Einheiten werden auch als Monoblock bezeichnet. An die Kopf-Block-Einheit schließt üblicherweise ein einteiliges Kurbelgehäuse an. Weiters sind Brennkraftmaschinen mit mehrteiligen Kurbelgehäusen bekannt, wobei jeweils ein Kurbelgehäuseteil und Lagerbügel für die Kurbelwellenlagerung in einem Stück zusammengegossen sind. Diese Komponente wird auch als "bed plate" bezeichnet. Bei Monoblock-Brennkraftmaschinen wurden bisher einzelne Lagerstühle mit einzelnen Lagerbügeln eingesetzt, um die nötige Zugänglichkeit für die Bearbeitung der Zylinderbohrungen zu ermöglichen.

Aus der GB 2 425 570 B ist eine Brennkraftmaschine mit Zylinderkopf und Zylinderblock bekannt, wobei Zylinderkopf und Zylinderblock integral ausgeführt sind.

Aus der JP 3-185220 A ist eine Brennkraftmaschine mit einer Kurbelgehäusestruktur bekannt, in welcher eine Massenausgleichswelle in einer Flanschbuchse gelagert ist. Dabei wird die einteilige Massenausgleichswelle durch eine stirnseitige Öffnung eingeschoben. Der Durchmesser des Flansches ist größer als der Durchmesser der Gewichte der Massenausgleichswelle. Eine ähnliche Anordnung ist aus der US 2007/261657 A bekannt.

Die DE 10 2004 027 588 B3 offenbart ein Kurbelgehäuse einer Brennkraftmaschine mit einem Massenausgleichsgetriebe, wobei zwischen dem Kurbelwellenzahnrad und dem nachfolgenden Antriebszahnrad ein Zwischenzahnrad, angeordnet ist. Das Zwischenzahnrad ist um eine Schwenkachse schwenkbar, die sich auf der Verbindungslinie der Achse des Zwischenzahnrades und des hiervon getriebenen Antriebszahnrades befindet. Nach der Befestigung des Gehäuses des Massenausgleichsgetriebes wird das Zwischenzahnrad um die Schwenkachse gedreht, bis das Zwischenzahnrad mit dem Kurbelwellenzahnrad ein Nullspiel aufweist. Es wird der Abstand zwischen dem Gehäuse und einer Anlagenfläche beim Nullspiel gemessen und daraus das zum Erreichen des gewünschten Flankenspiels zwischen dem Zwischenzahnrad und dem Kurbelwellenzahnrad erforderliche Abstandsmaß ermittelt und eine dem Abstandsmaß entsprechende Zwischenlage eingefügt. Danach wird das Zwischenzahnrad fixiert.

Es ist bekannt, Massenausgleichswellen im Kurbelgehäuse zu lagern. Insbesondere bei Monoblock-Brennkraftmaschinen ist es allerdings relativ aufwendig, die Lagerung der Massenausgleichswelle in der Kopf-Block-Einheit oder im Kurbelgehäuse zu bearbeiten.

Aufgabe der Erfindung ist es, bei einer Brennkraftmaschine der eingangs genannten Art den Bearbeitungsaufwand zu vermindern.

Erfindungsgemäß wird dies dadurch erreicht, dass- in Richtung der Achse der Kurbelwelle betrachtet - auf einer geraden Verbindungslinie zwischen der Achse der Massenausgleichswelle und der Achse der Kurbelwelle ein in einer Bohrung angeordneter, als Passstift ausgeführter erster Stift im Bereich der Stirnseite des Kurbelgehäuses positioniert ist, wobei die Flanschbuchse um den ersten Stift schwenkbar ist, und wobei vorzugsweise der erste Stift im Kurbelgehäuse und die Bohrung in der Flanschbuchse angeordnet ist.

Der erste Stift hält somit den nötigen Abstand für den Eingriff der Zahnräder zum Antrieb der Massenausgleichwelle. Die Bearbeitung der Fläche für die Befestigung der Flanschbuchsen im Kurbelgehäuse-Unterteil kann von der Außenseite her erfolgen. Dabei weist die Kopf-Block-Einheit eine gegossene Ausnehmung zur Aufnahme der Flanschbuchsen auf.

Um die Parallelität der Massenausgleichswelle zur Kurbelwelle sicherzustellen, ist es besonders vorteilhaft, wenn jeweils ein zweiter Stift im Bereich jeweils einer Stirnseite des Kurbelgehäuses angeordnet ist, welcher zwei parallel zur Verbindungslinie zwischen der Achse der Kurbelwelle und der Achse der Massenausgleichswelle ausgerichtete Abflachungen aufweist, und welcher jeweils in einer entsprechenden Führungsöffnung eines korrespondierenden Teils geführt ist, wobei vorzugsweise der zweite Stift jeweils in einer Stirnwand des Kurbelgehäuses und die Führungsöffnung in der jeweiligen Flanschbuchse angeordnet ist. Dabei sind die beiden Abflachungen parallel zur Verbindungslinie zwischen der Achse der Kurbelwelle und der Achse der Massenausgleichswelle positioniert. Die Flanschbuchsen können somit um den ersten Stift geschwenkt werden, ohne dass Nachteile für den Zahneingriff der beiden Zahnräder auftreten.

Diese Anordnung erlaubt es, die Aufnahmebohrungen für die Hauptlager der Kurbelwelle und die Lagerbohrungen in den Flanschbuchsen unabhängig von der Kopf-Block-Einheit in einer Aufspannung zu bearbeiten.

Vorzugsweise werden dabei beide Lagerbohrungen der Ausgleichswelle durch Flanschbuchsen gebildet.

Besonders vorteilhaft ist es, wenn das Kurbelgehäuse aus einem an die Kopf-Block-Einheit anschließenden ersten Teil und einem an den ersten Teil anschließenden zweiten Teil besteht, wobei erster und zweiter Teil in einer die Achse einer Kurbelwelle beinhaltenden Ebene, vorzugsweise normal auf die Zylinderachsen, geteilt sind, wobei vorzugsweise erster und/oder zweiter Teil zumindest ein Hauptlager für die Kurbelwelle ausbilden.

Die Zylinderlaufbuchsen können entweder integral in die Kopf-Block-Einheit eingearbeitet oder in diese eingeschraubt sein.

Im Rahmen der Erfindung ist weiters vorgesehen, dass zumindest eine Massenausgleichswelle im ersten Teil gelagert ist. Dabei wird die Position der Massenausgleichswelle so gefunden, dass die Gewichte der Welle mit genügend Abstand von der Einhüllenden der Pleuelstange rotieren können, wobei die Achse der Massenausgleichswelle nicht in der Ebene der Achse der Kurbelwelle liegen muss.

Dadurch, dass die Lagerbohrungen für die Massenausgleichswelle durch Flanschbuchsen gebildet sind, wird ermöglicht, dass die Bearbeitung der Lagerbohrungen für die Massenausgleichswelle nur im Kurbelgehäuse erfolgen kann und nicht zusammen mit der Kopf-Block-Einheit erfolgen muss. Die Flanschbuchsen werden dabei mit Schrauben im oberen ersten Teil des Kurbelgehäuses befestigt.

In weiterer Ausbildung der Erfindung kann vorgesehen sein, dass die Massenausgleichswelle zumindest einen Nocken für den Antrieb einer Einspritzpumpe aufweist. Dadurch ist es möglich, die Einspritzpumpe von der Ausgleichswelle anzutreiben. Die Position des Nockens ist dabei frei wählbar und kann beispielsweise auch in der Nähe des schwungradseitigen Lagers der Massenausgleichswelle angeordnet sein.

Die Erfindung wird im Folgenden anhand der Figuren näher erläutert. Es zeigen:
- Fig 1: eine erfindungsgemäße Brennkraftmaschine in einem Schnitt gemäß der Linie I-I in Fig. 2;
- Fig. 2: die Brennkraftmaschine in einem Schnitt gemäß der Linie II-II in Fig. 1;
- Fig. 3: die Brennkraftmaschine in einem Schnitt gemäß der Linie III-III in Fig. 1;
- Fig. 4: die Brennkraftmaschine in einer Draufsicht;
- Fig. 5: die erfindungsgemäße Brennkraftmaschine in einem Schnitt gemäß der Linie V-V in Fig. 1;
- Fig. 6: die Brennkraftmaschine in einer Ansicht gemäß der Linie VI-VI in Fig. 5; und
- Fig. 7: die Brennkraftmaschine in einem weiteren Schnitt durch das Kurbelgehäuse gemäß der Linie VII-VII in Fig. 6.

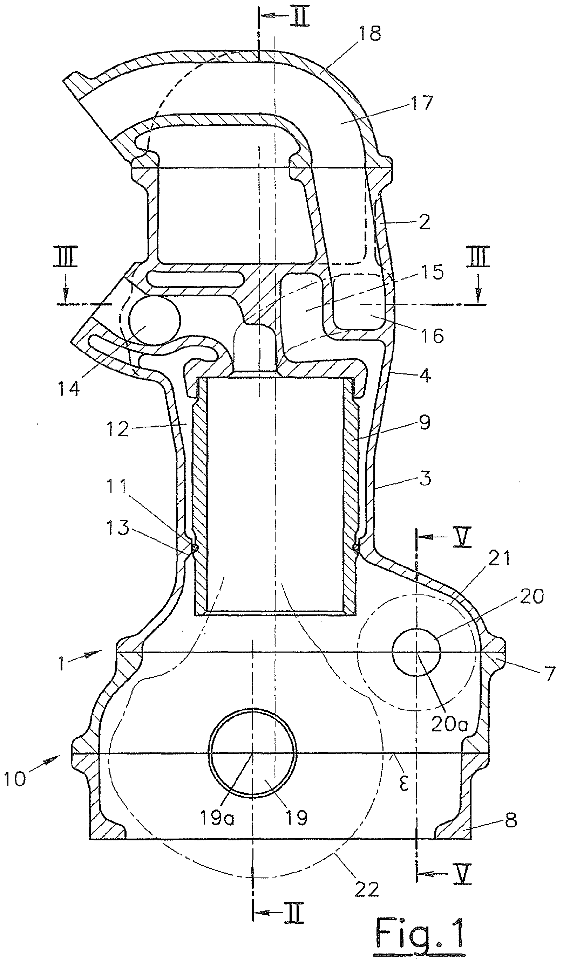

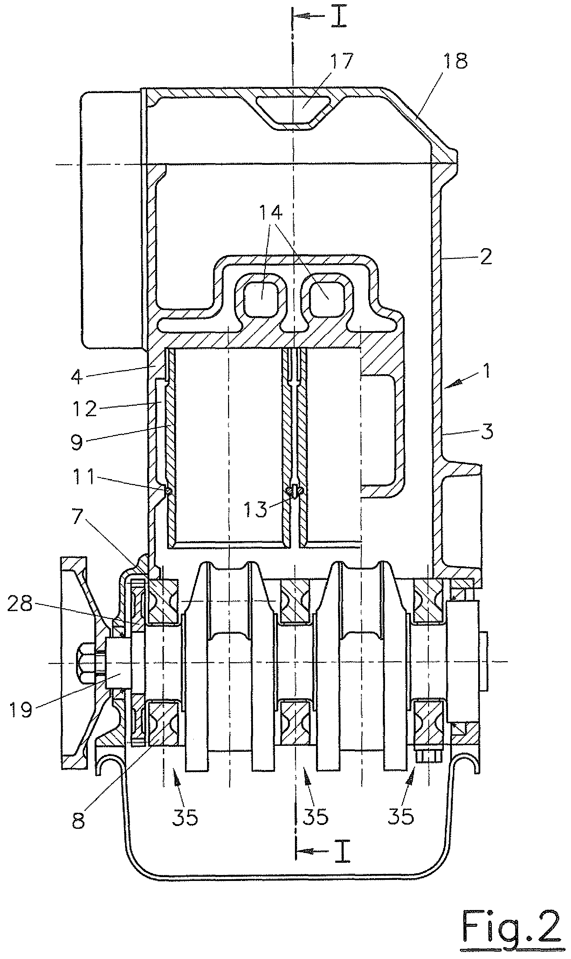

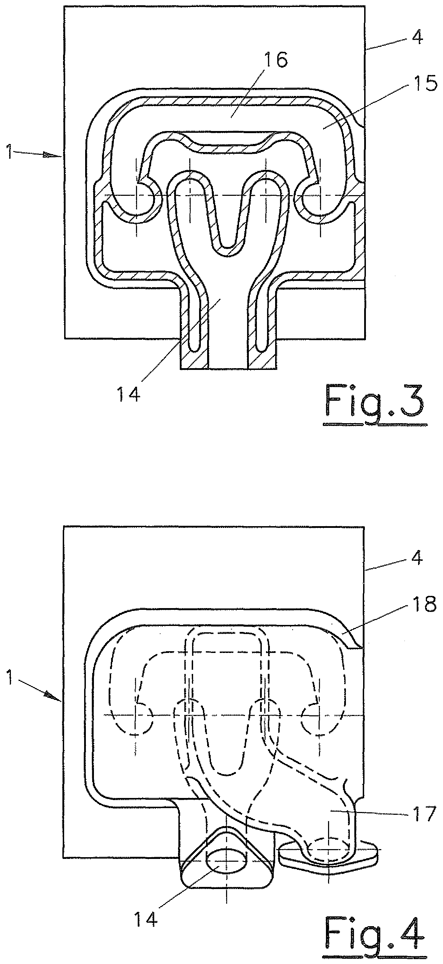

Die Fig. 1 bis Fig. 4 zeigen eine Brennkraftmaschine 1 mit einem Zylinderkopf 2 und einem Zylinderblock 3, wobei Zylinderkopf 2 und Zylinderblock 3 einstückig zu einer Kopf-Block-Einheit 4 ausgeführt sind. An die Kopf-Block-Einheit 4 schließt ein Kurbelgehäuse 10 an, welches aus einem oberen ersten Teil 7 und einem unteren zweiten Teil 8 besteht. Die Zylinderlaufbuchsen 9 sind in die Kopf-Block-Einheit 4 eingeschraubt. Alternativ dazu ist es auch denkbar, die Zylinderlaufbuchsen 9 integral mit der Kopf-Block-Einheit 4 auszubilden.

Kopf-Block-Einheit 4, erster Teil 7 und zweiter Teil 8 des Kurbelgehäuses 10 können aus verschiedenen Werkstoffen bestehen. Ein besonders leichtes Kurbelgehäuse 10 kann realisiert werden, wenn alle Komponenten aus Leichtmetall gefertigt werden. Alternativ dazu ist es auch denkbar, die Kopf-Block-Einheit 4 und den ersten Teil 7 aus Leichtmetall herzustellen, hingegen die Zylinderlaufbuchsen 9 und den hoch belasteten zweiten Teil 8 aus Grauguss zu fertigen. Der Abstand zwischen den einzelnen Zylindern ergibt sich aus der Bedingung, dass für die 0-Ringabdichtung 11 des Kühlwasserraums 12 eine vollständige Montage-Fase 13 ausgebildet werden muss. Im Fall der integralen Zylinderlaufbuchse wird der Zylinderabstand kleiner. Das zweiteilige Kurbelgehäuse 10 kann zumindest eine Massenausgleichwelle 20, zumindest eine Einspritzpumpenantriebswelle und/oder zumindest eine Ölpumpe 30 aufnehmen.

Wie aus den Fig. 1 bis Fig. 4 ersichtlich ist, können die Auslassleitungen 14 in die Kopf-Block-Einheit 4 integriert werden. Weiters können zumindest teilweise auch die Einlassleitungen 15 und der Einlasssammler 16 in die Kopf-Block-Einheit 4 integriert werden. Insbesondere im Falle eines Benzinmotors können lange Zuführleitungen 17 ("ram pipes") im Zylinderkopfdeckel 18 und der Kopf-Block-Einheit 4 untergebracht sein. Der Einlasssammler 16 liegt in diesem Fall an einer tieferen Position.

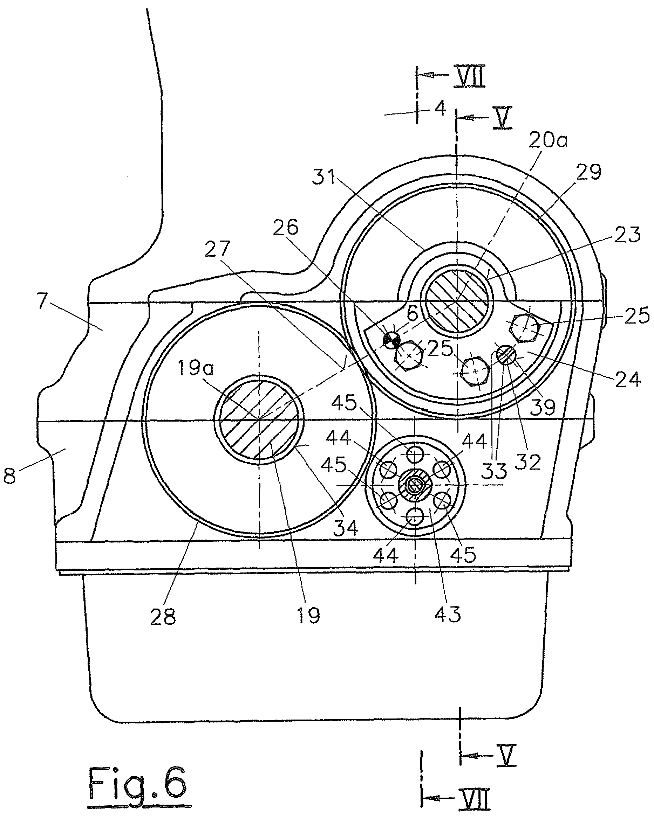

Wie aus den Fig. 1, Fig. 5 und Fig. 6 ersichtlich ist, kann die Massenausgleichswelle 20 in den ersten Teil 7 integriert werden. Dabei wird die Position der Massenausgleichswelle 20 so gefunden, dass die Ausgleichsgewichte 21 der Massenausgleichswelle 20 mit genügend Abstand von der Einhüllenden 22 der nicht weiter dargestellten Pleuelstange rotieren können, wobei die Achse 20a der Massenausgleichswelle 20 nicht unbedingt in der Ebene ε der Achse 19a der Kurbelwelle 19 liegen muss. Damit die Bearbeitung der Lagerbohrungen 23 unabhängig von der Kopf-Block-Einheit 4 erfolgen kann, werden die Lagerbohrungen 23 in Flanschbuchsen 24 untergebracht. Diese werden mit Flanschschrauben 25 im ersten Teil 7 befestigt. Ein als Passstift ausgebildeter erster Stift 26 auf der geraden Verbindungslinie 27 zwischen der Achse 19a der Kurbelwelle 19 und der Achse 20a der Massenausgleichswelle 20 ist jeweils in genau definierter Entfernung zur Achse 19a der Kurbelwelle 19 im Bereich der Stirnseiten 5 des ersten Teils 7 angeordnet. Der erste Stift 26 ist in einer Bohrung 6 der Flanschbuchse 24 geführt und hält den nötigen Abstand für den Eingriff der beiden Zahnräder 28, 29 zum Antrieb der Massenausgleichswelle 20 durch die Kurbelwelle 19.

Die Bearbeitung der Fläche 30 für die Befestigung der Flanschbuchsen 24 im ersten Teil 7 kann von außen erfolgen. In der Kopf-Block-Einheit 4 ist eine entsprechende Ausnehmung 31 zur Aufnahme der Flanschbuchsen 24 vorgesehen.

Weiters ist im Bereich der Stirnseite 5 des ersten Teils 7 ein zweiter Stift 32 mit zwei Abflachungen 33 in seinem Querschnitt vorgesehen, um die Parallelität der Massenausgleichswelle 20 zur Kurbelwelle 19 sicherzustellen. Dabei sind die beiden Abflachungen 33 parallel zur Verbindungslinie 27 zwischen den der Achse 19a der Kurbelwelle 19 und der Achse 20a der Massenausgleichswelle 20 ausgerichtet. Die Flanschbuchse 24 weist eine mit dem zweiten Stift 32 korrespondierende Führungsöffnung 39 auf. Dadurch kann die Flanschbuchse 24 um den ersten Stift 26 geschwenkt werden, ohne dass Nachteile für den Zahneingriff der beiden Zahnräder 28, 29 auftreten.

Auf diese Weise können die Aufnahmebohrungen 34 für die Hauptlager 35 der Kurbelwelle 19 und die Lagerbohrungen 23 in den Flanschbuchsen 24 unabhängig von der Kopf-Block-Einheit 4 in einer Aufspannung bearbeitet werden.

Der Antrieb der Massenausgleichswelle 20 kann anstelle der Zahnräder 28, 29 auch mit einer Kette erfolgen.

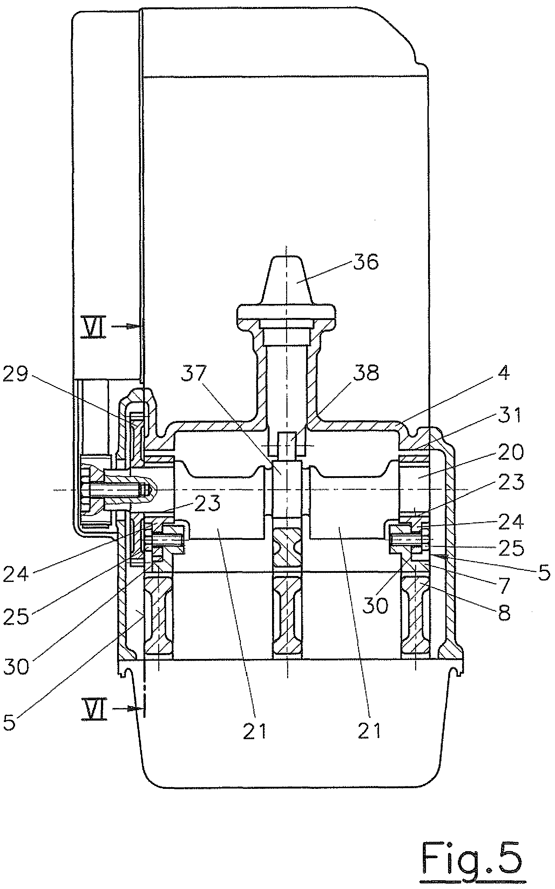

Wie aus der Fig. 5 zu entnehmen ist, kann die Massenausgleichswelle 20 auch zum Antrieb einer Einspritzpumpe 36 ausgebildet sein. Die Massenausgleichswelle 20 weist dazu einen Nocken 37 auf, welcher auf den Antriebsstößel 38 der Einspritzpumpe 36 einwirkt. Die Position des Nockens 37 ist frei wählbar und kann alternativ zu der in Fig. 5 dargestellten symmetrischen Anordnung auch im Bereich des schwungradseitigen Lagers vorgesehen sein.

Weiters kann in das Kurbelgehäuse 10, also entweder im ersten Teil 7 oder im zweiten Teil 8, auch eine Ölpumpe 40 angeordnet sein.

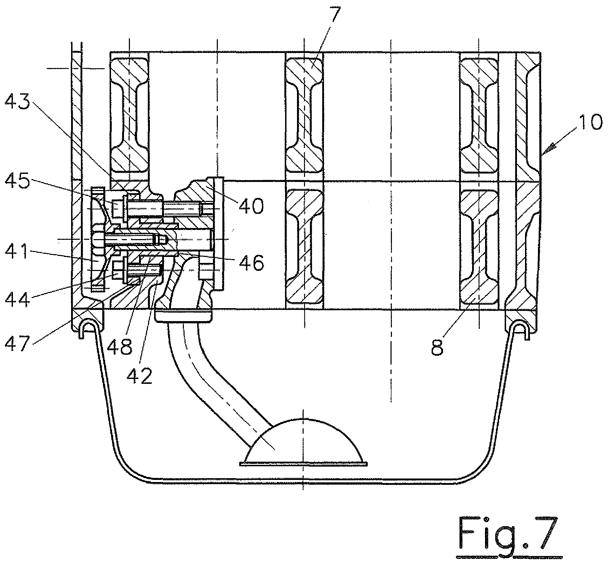

Fig. 7 zeigt eine Ausführung, bei der die Ölpumpe 40 im zweiten Teil 8 positioniert ist. Der Antrieb der Ölpumpe 40 erfolgt über die Kurbelwelle 19 durch das Antriebszahnrad 41. Zur Befestigung der Ölpumpe 40 wird in eine Montagewand 42 des zweiten Teils 8 ein Flansch 43 eingesetzt. Der Flansch 43 ist dabei über kurze erste Schrauben 44 an der Montagewand 42 des zweiten Teils 8 befestigt. Lange zweite Schrauben 45 ziehen die Ölpumpe 40 gegen die Stirnseite 46 des Flansches 43. Somit wird die Ölpumpe 40 nicht von innenliegenden Schrauben an den zweiten Teil 8 gepresst, sondern durch die außenliegenden zweiten Schrauben 45 gegen die Stirnfläche 46 des Flansches 43 gezogen. Die Schrauben 44, 45 für die Befestigung des Flansches 43 und der Ölpumpe 40 sind dabei auf derselben von außen zugänglichen Seite des Kurbelgehäuses 10 angeordnet.

Der Vorteil dieser Anordnung besteht darin, dass nur eine Bearbeitung der Aufspannfläche 47 und der Zentrierbohrung 48 für den Flansch 43 von außen nötig ist, um die Ölpumpe 40 im Inneren des Kurbelgehäuses 10 einzubauen. Ein weiterer Vorteil ergibt sich dadurch, dass die Befestigung der Ölpumpe 40 nur auf der Stirnfläche 46 der Zentrierhülse des Flansches 43 erfolgt und die Ölpumpe 40 größer als die Befestigungsfläche sein kann. Damit wird die Ölpumpe 40 in Bezug auf ihre Größe von der Dimension der Bearbeitung für den Zentrierdurchmesser unabhängig.

Der Antrieb der Ölpumpe 40 kann alternativ zum Antrieb über das Antriebszahnrad 41 auch über eine nicht weiter dargestellte Kette erfolgen.

## Patentansprüche

1. Brennkraftmaschine (1) mit einem Zylinderkopf (2) und einem Zylinderblock (3), wobei am Zylinderblock (3) ein Kurbelgehäuse (10) befestigt ist, und wobei im Kurbelgehäuse (10) zumindest eine Massenausgleichswelle (20) gelagert ist, wobei zumindest eine Lagerbohrung (23) für die Massenausgleichswelle (20) durch eine Flanschbuchse (24) gebildet ist, welche im Bereich einer Stirnseite (5) des Kurbelgehäuses (10) befestigt, insbesondere angeschraubt ist, **dadurch gekennzeichnet, dass** - in Richtung der Achse (19a) der Kurbelwelle (19) betrachtet - auf einer geraden Verbindungslinie (27) zwischen der Achse (20a) der Massenausgleichswelle (20) und der Achse (19a) der Kurbelwelle (19) ein in einer Bohrung (6) angeordneter, als Passstift ausgeführter erster Stift (26) im Bereich der Stirnseite (5) des Kurbelgehäuses (10) positioniert ist, wobei die Flanschbuchse (24) um den ersten Stift (26) schwenkbar ist, und wobei vorzugsweise der erste Stift (26) im Kurbelgehäuse (10) und die Bohrung (6) in der Flanschbuchse (24) angeordnet ist.

2. Brennkraftmaschine (1) nach Anspruch 1, **dadurch gekennzeichnet, dass** ein zweiter Stift (32) im Bereich der Stirnseite (5) des Kurbelgehäuses (10) angeordnet ist, welcher zwei parallel zur Verbindungslinie (27) zwischen der Achse (19a) der Kurbelwelle (19) und der Achse (20a) der Massenausgleichswelle (20) ausgerichtete Abflachungen (33) aufweist, und welcher in einer entsprechenden Führungsöffnung (39) eines korrespondierenden Teils geführt ist, wobei vorzugsweise der zweite Stift (32) im Kurbelgehäuse (10) und die Führungsöffnung (39) in der Flanschbuchse (24) angeordnet ist.

3. Brennkraftmaschine (1) nach Anspruch 1 oder 2, **dadurch gekennzeichnet, dass** die Massenausgleichswelle (20) zumindest einen Nocken (37) für den Antrieb einer Einspritzpumpe (36) aufweist.

4. Brennkraftmaschine (1) nach, einem der Ansprüche 1 bis 3, **dadurch gekennzeichnet, dass** Zylinderkopf (2) und Zylinderblock (3) einstückig als Kopf-Block-Einheit (4) ausgeführt sind.

5. Brennkraftmaschine (1) nach, einem der Ansprüche 1 bis 4, **dadurch gekennzeichnet, dass** das Kurbelgehäuse (10) aus einem an die Kopf-Block-Einheit (4) anschließenden ersten Teil (7) und einem an den ersten Teil (7) anschließenden zweiten Teil (8) besteht, wobei erster und zweiter Teil (7, 8) in einer die Achse (19a) einer Kurbelwelle (19) beinhaltenden Ebene (ε), vorzugsweise normal auf die Zylinderachsen, geteilt sind.

6. Brennkraftmaschine (1) nach Anspruch 5, **dadurch gekennzeichnet, dass** die Massenausgleichswelle (20) im ersten Teil (7) gelagert ist.

## Claims

1. An internal combustion engine (1), comprising a cylinder head (2) and a cylinder block (3), with a crankcase (10) being fixed to the cylinder block (3), and with at least one mass balancing shaft (20) being held in the crankcase (10), with at least one bearing bore (23) for the mass balancing shaft (20) being formed by a flanged bush (24) which is fixed in the region of a face side (5) of the crankcase (10), especially screwed onto the same, **characterised in that -** when seen in the direction of the axis (19a) of the crankshaft (19) - a first pin (26) which is arranged in a borehole (6) and arranged as an alignment pin is positioned in the region of the face side (5) of the crankcase (10) on a straight connecting line (27) between the axis (20a) of the mass balancing shaft (20) and the axis (19a) of the crankshaft (19), said flanged bush (24) being pivotable around the first pin (26), with preferably the first pin (26) being arranged in the crankcase (10) and the borehole (6) in the flanged bush (24).

2. An internal combustion engine (1) according to claim 1, **characterised in that** a second pin (32) is arranged in the region of the face side (5) of the crankcase (10), which second pin comprises two flattened portions (33) which are aligned parallel to the connecting line (27) between the axis (19a) of the crankshaft (19) and the axis (20a) of the mass balancing shaft (20), and which second pin is guided in a respective guide opening (39) of a corresponding part, and with preferably the second pin (32) being arranged in the crankcase (10) and the guide opening (39) in the flanged bush (24).

3. An internal combustion engine (1) according to claim 1 or 2, **characterised in that** the mass balancing shaft (20) comprises at least one cam (37) for driving an injection pump (36).

4. An internal combustion engine (1) according to one of the claims 1 to 3, **characterised in that** the cylinder head (2) and the cylinder block (3) are integrally arranged as a head-block unit (4).

5. An internal combustion engine (1) according to one of the claims 1 to 4, **characterised in that** the crankcase (10) consists of a first part (7) which is adjacent to the head-block unit (4) and a second part (8) which is adjacent to the first part (7), with the first and second part (7, 8) being divided in a plane (ε) containing the axis (19a) of a crankshaft (19), preferably normal to the cylinder axes.

6. An internal combustion engine (1) according to claim 5, **characterised in that** the mass balancing shaft (20) is held in the first part (7).

## Revendications

1. Moteur à combustion interne (1) comprenant une culasse (2) et un bloc cylindres (3) dans lequel, un carter moteur (10) est fixé au bloc cylindres (3), au moins un arbre d'équilibrage des masses (20) est monté dans le carter moteur (10), au moins un alésage de montage (23) de l'arbre d'équilibrage des masses (20) est formé par une douille à bride (24) qui est fixée et en particulier vissée dans la zone de la face frontale (5) du carter moteur (10),
**caractérisé en ce que**
dans la direction de l'axe (19a) du vilebrequin (19), sur la droite (27) reliant l'axe (20a) de l'arbre d'équilibrage des masses (20) et l'axe (19a) du vilebrequin (19) est positionnée dans la zone de la face frontale (5) du carter moteur (12) une première broche (26) réalisée sous la forme d'une broche d'ajustage montée dans un perçage (6), la douille à bride (24) pouvant pivoter autour de la première broche (26) et, de préférence la première broche (26) étant montée dans le carter moteur (10) et le perçage (6) est situé dans la douille à bride (24).

2. Moteur à combustion interne (1) conforme à la revendication 1,
**caractérisé en ce que**
dans la zone de la face frontale (5) du carter moteur (10) est positionnée une seconde broche (32) qui comporte deux méplats (33) orientés parallèlement à la droite de liaison (27) de l'axe (19a) du vilebrequin (19) et de l'axe (20a) de l'arbre d'équilibrage des masses (20), et qui est guidée dans une ouverture de guidage correspondante (39) d'une pièce correspondante, de préférence, la seconde broche (32) étant positionnée dans le carter moteur (10) et l'ouverture de guidage (39) étant située dans la douille à bride (24).

3. Moteur à combustion interne (1) conforme à l'une des revendications 1 et 2,
**caractérisé en ce que**
l'arbre d'équilibrage des masses (20) comporte au moins une came (37) permettant d'entraîner une pompe d'injection (36).

4. Machine à combustion interne (1) conforme à l'une des revendications 1 à 3,
**caractérisé en ce que**
la culasse (2) et le bloc cylindres (3) sont réalisés en une seule pièce sous la forme d'une unité culasse-bloc cylindres (4).

5. Moteur à combustion interne (1) conforme à l'une des revendications 1 à 4,
**caractérisé en ce que**
le carter moteur (10) est constitué d'une première partie (7) se connectant à l'unité culasse-bloc cylindres (4), et d'une seconde partie (8) se connectant à la première partie (7), la première et la seconde parties (7, 8) étant subdivisées selon un plan (ε) renfermant l'axe (19a) du vilebrequin (19), de préférence perpendiculaire aux axes des cylindres.

6. Moteur à combustion interne (1) conforme à la revendication 5,
**caractérisé en ce que**
l'arbre d'équilibrage des masses (20) est logé dans la première partie (7).
